(19) Europäisches Patentamt
European Patent Office
Office européen des brevets

(11) **EP 2 998 573 B1**

(12) **EUROPÄISCHE PATENTSCHRIFT**

(45) Veröffentlichungstag und Bekanntmachung des Hinweises auf die Patenterteilung:
**19.07.2017   Patentblatt 2017/29**

(51) Int Cl.:
*F03D 80/40* (2016.01)      *F03D 7/04* (2006.01)
*F03D 17/00* (2016.01)

(21) Anmeldenummer: **14185606.2**

(22) Anmeldetag: **19.09.2014**

(54) **Verfahren zum Betreiben einer Windenergieanlage mit einer Rotorblattheizeinrichtung**

Method for operating a wind turbine with a rotor blade heating device

Procédé de fonctionnement d'une éolienne dotée d'un dispositif de chauffage de pale de rotor

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.03.2016   Patentblatt 2016/12**

(73) Patentinhaber: **Nordex Energy GmbH**
**22419 Hamburg (DE)**

(72) Erfinder:
• **Runge, Ines**
**24558 Henstedt-Ulzburg (DE)**
• **Jacob, Danela**
**22850 Norderstedt (DE)**

(74) Vertreter: **Hauck Patentanwaltspartnerschaft mbB**
**Postfach 11 31 53**
**20431 Hamburg (DE)**

(56) Entgegenhaltungen:
**EP-A1- 2 626 557      WO-A1-2014/114295**
**US-A1- 2010 224 621**

**EP 2 998 573 B1**

**Beschreibung**

Die Erfindung betrifft ein Verfahren zum Betreiben einer Windenergieanlage, bei dem eine aktuelle Temperatur eines Rotorblatts ermittelt und in Abhängigkeit der ermittelten Temperatur eine Rotorblattheizeinrichtung aktiviert und deaktiviert wird.

Unter bestimmten klimatischen Bedingungen kann es zu einer Vereisung der Rotorblätter von Windenergieanlagen kommen. Dies kann zu einer Minderung der aerodynamischen Leistungsfähigkeit, zu einer erhöhten Belastung der Windenergieanlage durch Unwuchten und zu einer Gefährdung durch herabstürzendes Eis führen. Es sind daher unterschiedliche Rotorblattheizeinrichtungen bekannt, mit denen an den Rotorblättern anhaftendes Eis entfernt *(de-icing)* oder einer Vereisung bereits vor ihrer Entstehung entgegengewirkt *(anti-icing)* werden kann. Um den Energieverbrauch der Rotorblattheizeinrichtung gering zu halten, Überhitzungen des Rotorblatts zu vermeiden und zugleich eine zuverlässige Enteisung bzw. Verhinderung neuer Eisbildung zu erzielen, kommt es auf eine exakte Steuerung der Rotorblattheizeinrichtung an.

Aus der Druckschrift EP 2 626 557 A1 ist ein Verfahren zur Steuerung einer Rotorblattheizeinrichtung bekannt geworden, bei dem die Wärmeverluste am Rotorblatt unter Berücksichtigung der Umgebungstemperatur, der Windgeschwindigkeit und der Rotordrehzahl berechnet werden. Der Betrieb der Windenergieanlage soll in Abhängigkeit der berechneten Wärmeverluste erfolgen. Insbesondere soll eine Rotorblattheizeinrichtung aktiviert oder die Rotordrehzahl reduziert werden.

Ein anderes Verfahren zum Betreiben einer Windenergieanlage mit einer Rotorblattheizeinrichtung ist aus der Druckschrift EP 1 573 199 B1 bekannt geworden. Das Verfahren betrifft speziell die Situation bei Windstille oder sehr geringer Windgeschwindigkeit. In diesem Fall soll der Generator der Windenergieanlage als Motor verwendet werden, um den Rotor mit einer geringen Rotordrehzahl zu betreiben. Gleichzeitig soll der Pitchwinkel der Rotorblätter so eingestellt werden, dass eine Vereisung auf die Profilnasenkante, an der eine Rotorblattheizeinrichtung angeordnet ist, beschränkt bleibt. Das Dokument US20100224621 offenbart ein Verfahren gemäß dem Oberbegriff des Anspruchs 1. Eine andere, bekannte Möglichkeit zur Steuerung einer Rotorblattheizeinrichtung verwendet mehrere, an der Rotorblattoberfläche angeordnete Temperatursensoren. Mit diesen Temperatursensoren wird eine aktuelle Temperatur des Rotorblatts gemessen. In Abhängigkeit der gemessenen Temperatur wird dann eine Rotorblattheizeinrichtung aktiviert und deaktiviert. Auf diese Weise ist es möglich, das Rotorblatt auf einer gewünschten Temperatur zu halten. Nachteilig ist jedoch der hohe Aufwand, den die Verwendung von Temperatursensoren mit sich bringt. Dies gilt für den Einbau der Temperatursensoren und insbesondere für deren Wartung und nötigenfalls Reparatur.

Davon ausgehend ist es die Aufgabe der Erfindung, ein Verfahren zum Betreiben einer Windenergieanlage, bei dem eine aktuelle Temperatur eines Rotorblatts ermittelt und eine Rotorblattheizeinrichtung in Abhängigkeit von der ermittelten, aktuellen Temperatur aktiviert und deaktiviert wird, zur Verfügung zu stellen, das mit einfacheren Mitteln ausgeführt werden kann, sowie eine entsprechende Windenergieanlage.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zum Betreiben einer Windenergieanlage und weist die folgenden Schritte auf:

- Ermitteln einer aktuellen Temperatur eines Rotorblatts,

- Aktivieren und Deaktivieren einer Rotorblattheizeinrichtung in Abhängigkeit der ermittelten, aktuellen Temperatur, wobei beim Ermitteln der aktuellen Temperatur folgende Schritte ausgeführt werden:

- Annehmen eines Temperaturstartwerts,

- Berechnen einer Temperaturänderung unter Berücksichtigung mindestens einer vorgegebenen Kenngröße für das Temperaturverhalten des Rotorblatts und mindestens eines Betriebsparameters der Windenergieanlage.

Die bei dem Verfahren ermittelte, aktuelle Temperatur des Rotorblatts kann grundsätzlich eine beliebige Temperatur sein, die für eine Vereisung des Rotorblatts aussagekräftig ist. Insbesondere kann es sich um eine Oberflächentemperatur des Rotorblatts handeln.

Die Rotorblattheizeinrichtung kann ein elektrisches Heizelement aufweisen, das bei aktivierter Heizeinrichtung von einem elektrischen Heizstrom durchströmt wird, insbesondere entlang einer Rotorblattlängsrichtung. Das Heizelement kann ein elektrisch leitfähiges, flächiges Material aufweisen, beispielsweise ein Gewebe oder Gelege aus Kohlenstofffasern, insbesondere in Form einer Heizmatte.

Bei der Erfindung wird die aktuelle Temperatur des Rotorblatts nicht durch eine Temperaturmessung am Rotorblatt ermittelt, sondern durch eine Berechnung, die ausgehend von einem Temperaturstartwert die aktuelle Temperatur durch fortlaufende Berechnung der Temperaturänderung feststellt. Bei der Berechnung der Temperaturänderung wird mindestens eine vorgegebene Kenngröße für das Temperaturverhalten des Rotorblatts berücksichtigt. Diese Kenngröße ist für die Bauart des betrachteten Rotorblatts charakteristisch und kann zur Beschreibung des zeitlichen Verlaufs der Temperatur des Rotorblatts herangezogen werden. Grundsätzlich ist es möglich, die Kenngröße auf Grundlage der Geometrie sowie der Oberflächen- und/oder Materialeigenschaften der Elemente des Rotorblatts in Modellrechnungen zu bestimmen. Ebenfalls möglich ist eine experimentelle Ermittlung der Kenngröße.

Bei der Berechnung der Temperaturänderung wird außerdem mindestens ein Betriebsparameter der Windenergieanlage berücksichtigt. Dabei kann es sich insbesondere um einen Parameter handeln, der innerhalb einer Betriebsführung der Windenergieanlage ohne Weiteres verfügbar ist. Es versteht sich, dass darüber hinaus bei der Berechnung der Temperaturänderung weitere Größen berücksichtigt werden können, insbesondere Umgebungsbedingungen wie z.B. eine Umgebungstemperatur, ein Luftdruck oder eine Luftfeuchtigkeit.

Ausgehend von einem auf einer plausiblen Annahme beruhenden Temperaturstartwert gelingt die fortlaufende Berechnung der Temperaturänderung also unter Berücksichtigung nur einmalig zu ermittelnder oder ohne Weiteres verfügbarer Größen. Eine Messung der aktuellen Temperatur des Rotorblatts ist bei der Erfindung nicht vorgesehen und für eine korrekte Steuerung der Rotorblattheizeinrichtung auch nicht erforderlich. Dadurch kann auf den Einsatz tendenziell reparaturanfälliger Temperatursensoren am Rotorblatt verzichtet werden. Der Aufbau der Windenergieanlage kann wesentlich vereinfacht werden. Außerdem wird eine besonders hohe Zuverlässigkeit bei der Steuerung der Rotorblattheizeinrichtung erreicht.

In einer Ausgestaltung wird die Rotorblattheizeinrichtung aktiviert, wenn die ermittelte, aktuelle Temperatur eine vorgegebene Mindesttemperatur unterschreitet. Diese Maßnahme braucht nur dann ausgeführt zu werden, wenn die aktuellen Betriebsbedingungen der Anlage Randbedingungen für eine Vereisung des Rotorblatts erfüllen, insbesondere bei Niederschlag oder bei Überschreiten einer bestimmten Luftfeuchtigkeit. Durch das rechtzeitige Aktivieren der Rotorblattheizeinrichtung wird einer Vereisung entgegengewirkt.

In einer Ausgestaltung wird die Rotorblattheizeinrichtung deaktiviert, wenn die ermittelte Temperatur eine vorgegebene Höchsttemperatur überschreitet. Durch diese Maßnahme werden auf einfache Weise eine Überhitzung des Rotorblatts und ein unnötiger Energieverbrauch der Rotorblattheizeinrichtung vermieden.

In einer Ausgestaltung umfasst die mindestens eine vorgegebene Kenngröße eine Zeitkonstante für das Aufheiz- und/oder Abkühlverhalten des Rotorblatts. Die Zeitkonstante bezieht sich auf eine Exponentialfunktion, die den Verlauf der Temperatur in einem bestimmten Zeitintervall beschreibt. Es handelt sich um eine wichtige Kenngröße zur Beschreibung des Temperaturverhaltens des Rotorblatts.

In einer Ausgestaltung umfasst die mindestens eine vorgegebene Kenngröße eine maximale Temperaturdifferenz, die mit der Rotorblattheizeinrichtung erzielbar ist. Die maximale Temperaturdifferenz ist der Grenzwert der Rotorblatttemperatur, der sich nach dauerhaftem Betrieb der Rotorblattheizeinrichtung einstellt, abzüglich der Umgebungstemperatur. Es handelt sich um eine maßgebliche Kenngröße für den Temperaturverlauf bei aktivierter Rotorblattheizeinrichtung.

In einer Ausgestaltung sind die Zeitkonstante und/oder die maximale Temperaturdifferenz von einer Windgeschwindigkeit und/oder einer Rotordrehzahl abhängig. In diesen Ausgestaltungen wird berücksichtigt, dass es sich bei den genannten Kenngrößen für das Temperaturverhalten des Rotorblatts nicht um feste Werte handelt, sondern dass diese Werte von den Betriebsparametern und/oder Umgebungsbedingungen abhängig sein können. Bei der Berechnung der Temperaturänderung können als Zeitkonstante und als maximale Temperaturdifferenz in jedem betrachteten Zeitintervall die den Betriebs- und Umgebungsbedingungen entsprechenden Werte verwendet werden. Hierzu können mathematische Funktionen für die jeweilige Kenngröße, die die Abhängigkeit von Windgeschwindigkeit und/oder Drehzahl beschreiben, herangezogen werden. Alternativ kann die jeweilige Kenngröße als Kennfeld oder in Tabellenform hinterlegt sein. Die Berücksichtigung der den aktuellen Betriebs- und/oder Umgebungsbedingungen entsprechenden Kenngrößen kann die Genauigkeit bei der Berechnung des Temperaturverlaufs erhöhen.

In einer Ausgestaltung umfasst der mindestens eine Betriebsparameter eine Rotordrehzahl. Die Rotordrehzahl hat einen großen Einfluss auf die Temperaturentwicklung, da sie für die Strömungsgeschwindigkeit am Rotorblatt und damit für die Kühlung des Rotorblatts durch die Luft maßgeblich ist. Wie bereits erläutert, kann die Rotordrehzahl insbesondere berücksichtigt werden, indem die dem aktuellen Betriebszustand entsprechenden Kenngrößen ausgewählt werden.

In einer Ausgestaltung umfasst der mindestens eine Betriebsparameter einen Zustand der Rotorblattheizeinrichtung. Der Zustand kann eine aktuelle elektrische Leistung der Rotorblattheizeinrichtung sein bzw. der Betrieb der Rotorblattheizeinrichtung mit einer bestimmten Leistungsstufe. Ebenfalls möglich ist die Berücksichtigung einer Ein-/Aus-Information. Die genannten Zustände haben ebenfalls einen wesentlichen Einfluss auf die Temperaturentwicklung des Rotorblatts.

In einer Ausgestaltung entspricht der angenommene Temperaturstartwert einer gemessenen Umgebungstemperatur. Diese Annahme geht davon aus, dass sich Rotorblatt und Umgebung im thermischen Gleichgewicht befinden. Sie ist in vielen Fällen plausibel, insbesondere wenn die Rotorblattheizeinrichtung für einen längeren Zeitraum deaktiv war.

In einer Ausgestaltung wird in vorgegebenen Zeitabständen die Rotorblattheizeinrichtung für einen vorgegebenen Zeitraum deaktiviert und anschließend wird als Temperaturstartwert die Umgebungstemperatur angenommen. Dieser Vorgang kann beispielsweise einmal am Tag ausgeführt werden. Der vorgegebene Zeitraum, für den die Rotorblattheizeinrichtung deaktiviert wird, kann beispielsweise zwei Zeitkonstanten oder mehr lang sein. Auf diese Weise wird in regelmäßigen Abständen ein plausibler Temperaturstartwert ermittelt, der als Grundlage für die weiteren Berechnungen dienen kann.

In einer Ausgestaltung wird die Rotorblattheizeinrichtung für einen vorgegebenen Zeitraum aktiviert und anschließend wird als Temperaturstartwert die Umgebungstemperatur zuzüglich einer maximalen Temperaturdifferenz, die mit der Rotorblattheizeinrichtung erzielbar ist, angenommen. Auch dieser Vorgang kann in vorgegebenen Zeitabständen wiederholt werden, beispielsweise einmal pro Tag. Der vorgegebene Zeitraum kann beispielsweise zwei Zeitkonstanten oder mehr betragen. Auch auf diese Weise wird ein plausibler Temperaturstartwert zur Verfügung gestellt. Dieses Vorgehen eignet sich besonders für niedrige Umgebungstemperaturen, bei denen bei der alternativ möglichen Deaktivierung der Rotorblattheizeinrichtung für einen vorgegebenen Zeitraum mit einer unerwünschten Vereisung des Rotorblatts gerechnet werden müsste.

In einer Ausgestaltung erfolgt ein Aktivieren der Rotorblattheizeinrichtung in mehreren unterschiedlichen Leistungsstufen, wobei die beim Berechnen der Temperaturänderung berücksichtigte, mindestens eine Kenngröße für das Temperaturverhalten des Rotorblatts von einer aktivierten Leistungsstufe abhängig ist. Insbesondere kann eine maximale Temperaturdifferenz gewählt werden, die bei der betreffenden, aktivierten Leistungsstufe erreichbar ist.

In einer Ausgestaltung wird die Ermittlung der aktuellen Temperatur für mehrere vorgegebene Punkte an dem Rotorblatt vorgenommen. Die hierbei verwendeten Kenngrößen für das Temperaturverhalten des Rotorblatts können dann speziell auf die vorgegebenen Punkte bezogen sein. Insbesondere können diejenigen Punkte in die Auswertung einbezogen werden, an denen bei herkömmlichen Rotorblättern ansonsten gleicher Bauart Temperatursensoren vorgesehen waren. Bei der Steuerung der Rotorblattheizeinrichtung kann dann auf Erfahrungswerte zurückgegriffen werden.

In einer Ausgestaltung wird beim Aktivieren der Rotorblattheizeinrichtung derjenige Punkt ausgewertet, für den die niedrigste Temperatur ermittelt wurde und/oder beim Deaktivieren der Rotorblattheizeinrichtung wird derjenige Punkt ausgewertet, für den die höchste Temperatur ermittelt wurde. Auf diese Weise wird ein Überschreiten einer Höchsttemperatur bzw. ein Unterschreiten einer Mindesttemperatur an allen Punkten des Rotorblatts verhindert.

Die oben genannte Aufgabe wird ebenfalls gelöst durch die Windenergieanlage mit den Merkmalen des Anspruchs 15. Die Windenergieanlage hat eine Rotorblattheizeinrichtung und eine Steuerung, die die Rotorblattheizeinrichtung in Abhängigkeit einer ermittelten, aktuellen Temperatur eines Rotorblatts aktivieren und deaktivieren kann, wobei die Steuerung dazu ausgebildet ist, zum Ermitteln der aktuellen Temperatur die folgenden Schritte auszuführen:

• Annehmen eines Temperaturstartwerts,

• Berechnen einer Temperaturänderung unter Berücksichtigung mindestens einer vorgegebenen Kenngröße für das Temperaturverhalten des Rotorblatts und mindestens eines Betriebsparameters der Windenergieanlage.

Zu den Merkmalen und Vorteilen der Windenergieanlage wird auf die vorstehenden Erläuterungen des erfindungsgemäßen Verfahrens verwiesen, die entsprechend gelten. Es versteht sich, dass die Windenergieanlage, insbesondere die Steuerung, dazu ausgebildet sein kann, die vorstehend erläuterten, besonderen Ausgestaltungen des Verfahrens auszuführen.

Die Erfindung wird nachfolgend anhand eines in zwei Figuren dargestellten Ausführungsbeispiels näher erläutert. Es zeigen:

Fig. 1     eine vereinfachte Darstellung einer erfindungsgemäßen Windenergieanlage,

Fig. 2     ein Diagramm zum Verlauf der Temperatur an einem Rotorblatt und

Fig. 3     ein weiteres Diagramm zum Verlauf der Temperatur an einem Rotorblatt.

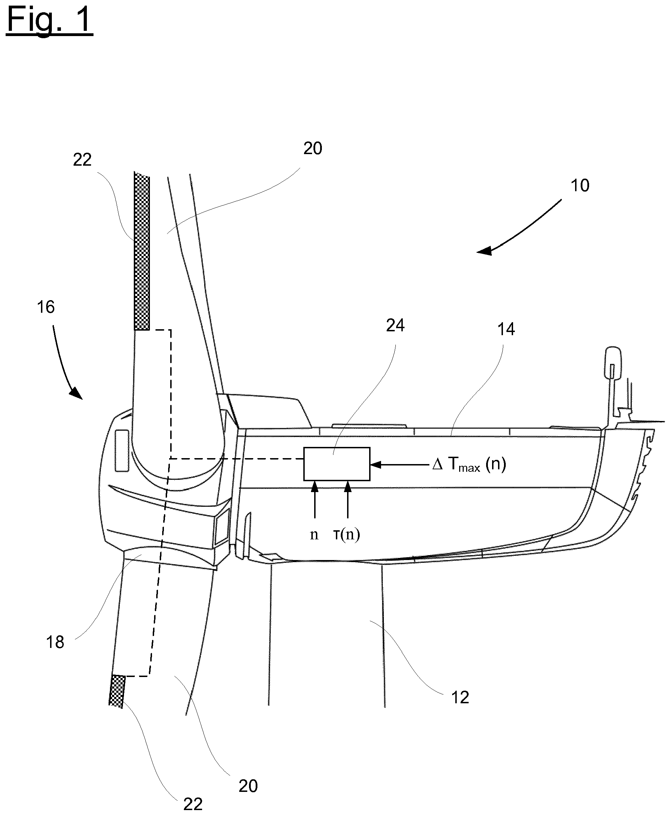

Figur 1 zeigt eine Windenergieanlage 10, die einen Turm 12, eine Gondel 14 und einen Rotor 16 aufweist. Der Rotor 16 hat eine Rotornabe 18, an der mehrere Rotorblätter 20 befestigt sind. Jedes der Rotorblätter 20 weist eine Rotorblattheizeinrichtung 22 auf. In der Gondel 14 befindet sich eine Steuerung 24, die dazu ausgebildet ist, die Rotorblattheizeinrichtungen 22 zu aktivieren und zu deaktivieren. Dies ist nur schematisch durch die gestrichelten Linien angedeutet.

Die Steuerung 24 ist außerdem dazu ausgebildet, eine aktuelle Temperatur eines Rotorblatts zu ermitteln. Dies kann für jedes der vorhandenen Rotorblätter 20 gesondert oder gemeinsam für alle vorhandenen Rotorblätter 20 geschehen. Die Steuerung 24 aktiviert und deaktiviert die Rotorblattheizeinrichtungen 22 in Abhängigkeit von der ermittelten, aktuellen Temperatur.

Um die aktuelle Rotorblatt-Temperatur zu ermitteln, verwendet die Steuerung 24 keinerlei an den Rotorblättern 20 angeordnete Temperatursensoren. Stattdessen nimmt die Steuerung 24 einen plausiblen Temperaturstartwert $T_{start}$ an und berechnet fortlaufend eine Temperaturänderung. Hierbei berücksichtigt die Steuerung 24 als vorgegebene Kenngrößen für das Temperaturverhalten der Rotorblätter 22 eine maximale Temperaturdifferenz $\Delta T_{max}(n)$ und eine Zeitkonstante $\tau(n)$. Diese beiden Kenngrößen hängen ihrerseits von der Rotordrehzahl n ab. Außerdem berücksichtigt die Steuerung 24 bei der Berechnung der Temperaturänderung eine Rotordrehzahl n, die ein Betriebsparameter der Windenergieanlage 10 ist.

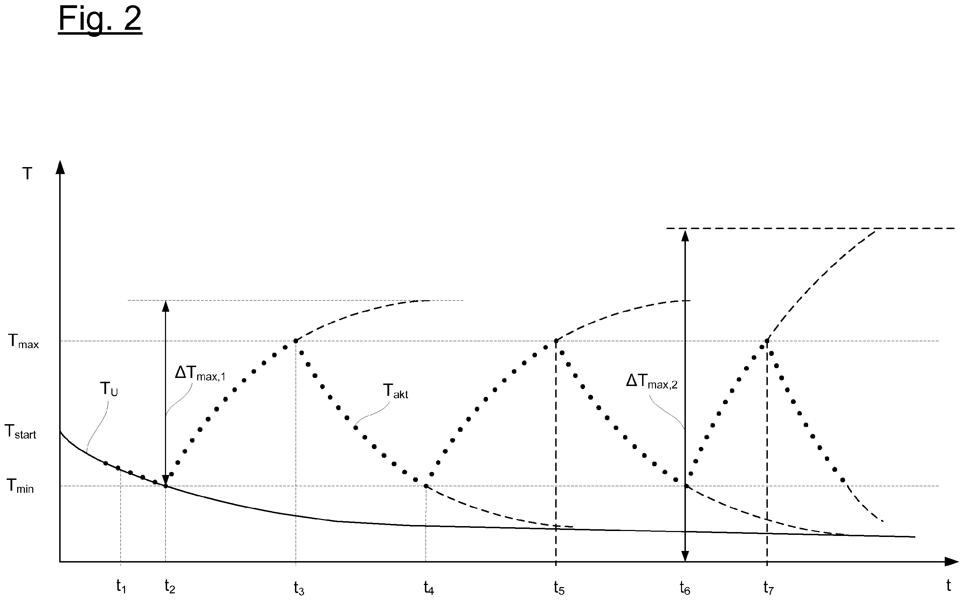

Weitere Einzelheiten des erfindungsgemäßen Verfahrens werden anhand der Figur 2 erläutert. In dem Diagramm sind der Verlauf der Umgebungstemperatur $T_U$ sowie der Verlauf der ermittelten, aktuellen Tempe-

ratur $T_{akt}$ der Rotorblätter 20 aufgetragen.

Zum Zeitpunkt $t_1$ wird als Temperaturstartwert die Umgebungstemperatur $T_U$ angenommen. Von da an wird fortlaufend die Temperaturänderung berechnet. Die auf diese Weise ermittelte aktuelle Temperatur $T_{akt}$ des Rotorblatts ist punktiert in das Diagramm eingetragen. Sie setzt sich aus mehreren Zeitabschnitten zusammen, die wie folgt erläutert werden.

Zum Zeitpunkt $t_1$ war die Rotorblattheizeinrichtung 22 für einen längeren Zeitraum deaktiv. Die Annahme, dass die Temperatur des Rotorblatts der Temperatur der Umgebungsluft entspricht, ist daher plausibel, so dass die Umgebungstemperatur $T_U$ als Temperaturstartwert $T_{start}$ angenommen werden kann. Zum Zeitpunkt $t_1$ befindet sich die ermittelte aktuelle Temperatur $T_{akt}$ des Rotorblatts innerhalb des angestrebten Temperaturbereichs zwischen einer Mindesttemperatur $T_{min}$ und einer Höchsttemperatur $T_{max}$. Die Rotorblattheizeinrichtung bleibt daher deaktiv und die Temperaturänderung des Rotorblattes folgt im Wesentlichen der Umgebungstemperatur.

Zum Zeitpunkt $t_2$ unterschreitet die so ermittelte, aktuelle Temperatur $T_{akt}$ der Rotorblätter 20 die Mindesttemperatur $T_{min}$, sodass die Rotorblattheizeinrichtung 22 zu diesem Zeitpunkt von der Steuerung 24 aktiviert wird. Im Beispiel wird eine Heizleistung gewählt, die einem Drittel der maximalen Heizleistung der Rotorblattheizeinrichtung entspricht. Dieser Leistungsstufe ist eine von der Rotordrehzahl n abhängige, maximale Temperaturdifferenz $\Delta T_{max,1}$ als Kenngröße für das Temperaturverhalten zugeordnet. Während des Aufheizens geht die Berechnung von einer exponentiellen Zunahme der Temperatur aus, wobei für die Temperaturänderung folgende Formel gilt:

$$\Delta T(t) = \Delta T_{max,\,1} \cdot (1 - e^{-(t-t_2)/\tau})$$

Die in der Formel enthaltene Zeitkonstante $\tau$ ist eine weitere, ihrerseits von der Rotordrehzahl n abhängige Kenngröße für das Temperaturverhalten der Rotorblätter 20.

Zum Zeitpunkt $t_3$ ist die ermittelte Temperatur des Rotorblattes auf die Höchsttemperatur $T_{max}$ angestiegen, sodass die Rotorblattheizeinrichtung 22 deaktiviert wird. Bis zum Zeitpunkt $t_4$ schließt sich dann eine weitere Phase an, in der die Rotorblätter 20 abkühlen. Hierfür wird wieder eine exponentielle Temperaturabnahme hin zur Umgebungstemperatur $T_U$ angenommen.

Zum Zeitpunkt $t_4$ unterschreitet die ermittelte aktuelle Temperatur $T_{akt}$ des Rotorblatts die Mindesttemperatur $T_{min}$ erneut und die Rotorblattheizeinrichtung wird daher wieder aktiviert, im Beispiel nochmals mit der bereits zum Zeitpunkt $t_2$ aktivierten Leistungsstufe.

Zum Zeitpunkt $t_5$ ist die Höchsttemperatur $T_{max}$ wieder erreicht und die Rotorblattheizeinrichtung 22 wird dementsprechend bis zum Zeitpunkt $t_6$, zu dem die ermittelte aktuelle Temperatur $T_{akt}$ des Rotorblattes die Mindesttemperatur $T_{min}$ wieder unterschreitet, deaktiviert.

Zum Zeitpunkt $t_6$ wird die Rotorblattheizeinrichtung 22 im Beispiel mit ihrer größten Leistungsstufe aktiviert. Dieser ist eine maximale Temperaturdifferenz $\Delta T_{max,2}$ zugeordnet, die größer ist als $\Delta T_{max,1}$, sodass sich eine steiler ansteigende Exponentialfunktion ergibt. Die ermittelte aktuelle Temperatur $T_{akt}$ folgt dieser Funktion, bis zum Zeitpunkt $t_7$ wiederum die Höchsttemperatur $T_{max}$ erreicht und die Rotorblattheizeinrichtung 22 deaktiviert wird. Es schließt sich eine weitere Abkühlphase an.

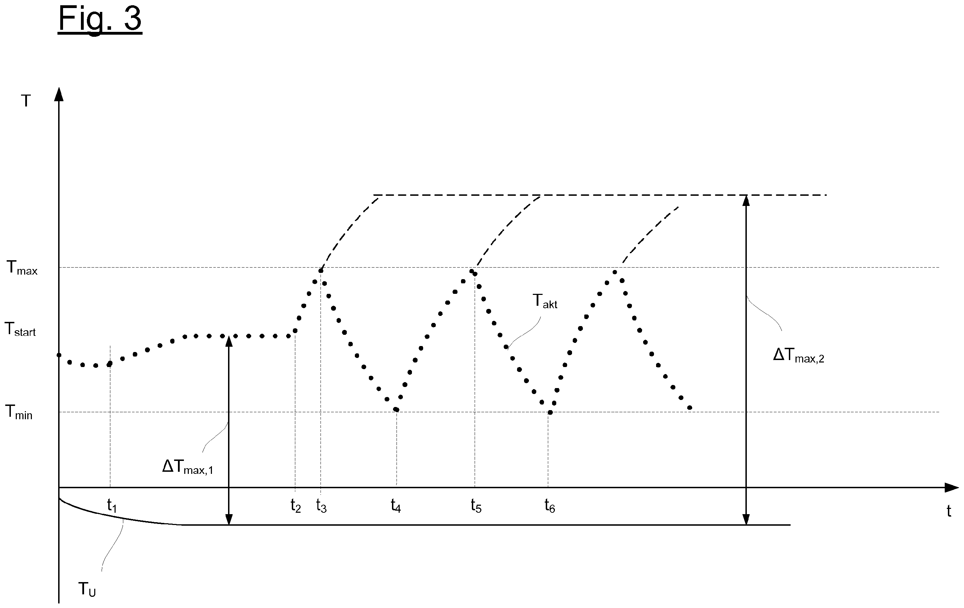

Fig. 3 zeigt eine weitere Ausführung des erfindungsgemäßen Verfahrens. Die Umgebungstemperatur $T_U$ liegt in einem Bereich unter 0° C. Ein Abschalten der Rotorblattheizeinrichtung 22 zur Einstellung des Temperaturstartwerts $T_{start}$ auf die Umgebungstemperatut $T_U$ ist nicht möglich, da das Rotorblatt vereisen würde.

Die Rotorblattheizeinrichtung 22 wird zum Zeitpunkt $t_1$ aktiviert und auf einer niedrigen Heizstufe betrieben, so dass sich bis zum Zeitpunkt $t_2$ eine Temperatur $T_{start}$ einstellt. Diese Temperatur entspricht der Umgebungstemperatur $T_U$ zuzüglich der Temperaturdifferenz $\Delta T_{max,1}$, die mit der niedrigen Heizstufe maximal erreichbar ist. $T_{start}$ liegt im angestrebten Temperaturbereich zwischen $T_{min}$ und $T_{max}$.

Ab dem Zeitpunkt $t_2$ wird die aktuelle Rotorblatttemperatur $T_{akt}$ entsprechend dem Beispiel in Fig. 2 ermittelt. Zum Zeitpunkt $t_2$ wird die Rotorblattheizeinrichtung 22 mit der größten Leistungsstufe aktiviert. Zum Zeitpunkt $t_3$ ist die Höchsttemperatur $T_{max}$ erreicht und die Rotorblattheizeinrichtung 22 wird dementsprechend bis zum Zeitpunkt $t_4$, zu dem die ermittelte aktuelle Temperatur $T_{akt}$ des Rotorblattes die Mindesttemperatur $T_{min}$ wieder unterschreitet, deaktiviert. Weitere Heiz- und Abkühlphasen folgen entsprechend.

Liste der verwendeten Bezugszeichen:

| | |
|---|---|
| 10 | Windenergieanlage |
| 12 | Turm |
| 14 | Gondel |
| 16 | Rotor |
| 18 | Rotornabe |
| 20 | Rotorblatt |
| 22 | Rotorblattheizeinrichtung |
| 24 | Steuerung |
| $T_{start}$ | Temperaturstartwert |
| $\tau$ | Zeitkonstante |
| n | Rotordrehzahl |
| $T_U$ | Umgebungstemperatur |
| $T_{min}$ | Mindesttemperatur |
| $T_{max}$ | Höchsttemperatur |
| $\Delta T_{max,1}$ | maximale Temperaturdifferenz bei Leistungsstufe 33% |

$\Delta T_{max,2}$　　maximale Temperaturdifferenz bei voller Leistung

$T_{akt}$　　aktuelle Rotorblatttemperatur

**Patentansprüche**

1. Verfahren zum Betreiben einer Windenergieanlage (10) mit den folgenden Schritten:

   • Ermitteln einer aktuellen Temperatur ($T_{akt}$) eines Rotorblatts (20),
   • Aktivieren und Deaktivieren einer Rotorblattheizeinrichtung (22) in Abhängigkeit der ermittelten, aktuellen Temperatur ($T_{akt}$), **dadurch gekennzeichnet, dass** beim Ermitteln der aktuellen Temperatur ($T_{akt}$) folgende Schritte ausgeführt werden:
   • Annehmen eines Temperaturstartwerts ($T_{start}$),
   • Berechnen einer Temperaturänderung unter Berücksichtigung mindestens einer vorgegebenen Kenngröße für das Temperaturverhalten des Rotorblatts (20) und mindestens eines Betriebsparameters der Windenergieanlage (10).

2. Verfahren nach Anspruch 1, **dadurch gekennzeichnet, dass** die Rotorblattheizeinrichtung (22) aktiviert wird, wenn die ermittelte, aktuelle Temperatur ($T_{akt}$) eine vorgegebene Mindesttemperatur ($T_{min}$) unterschreitet.

3. Verfahren nach Anspruch 1 oder 2, **dadurch gekennzeichnet, dass** die Rotorblattheizeinrichtung (22) deaktiviert wird, wenn die ermittelte, aktuelle Temperatur ($T_{akt}$) eine vorgegebene Höchsttemperatur ($T_{max}$) überschreitet.

4. Verfahren nach einem der Ansprüche 1 bis 3, **dadurch gekennzeichnet, dass** die mindestens eine vorgegebene Kenngröße eine Zeitkonstante ($\tau$) für das Aufheiz- und/oder Abkühlverhalten des Rotorblatts (20) umfasst.

5. Verfahren nach einem der Ansprüche 1 bis 4, **dadurch gekennzeichnet, dass** die mindestens eine vorgegebene Kenngröße eine maximale Temperaturdifferenz ($\Delta T_{max,1}$, $\Delta T_{max,2}$) umfasst, die mit der Rotorblattheizeinrichtung (22) erzielbar ist.

6. Verfahren nach Anspruch 4 oder 5, **dadurch gekennzeichnet, dass** die Zeitkonstante ($\tau$) und/oder die maximale Temperaturdifferenz ($\Delta T_{max,1}$, $\Delta T_{max,2}$) von einer Windgeschwindigkeit und/oder einer Rotordrehzahl (n) abhängig ist.

7. Verfahren nach einem der Ansprüche 1 bis 6, **dadurch gekennzeichnet, dass** der mindestens eine Betriebsparameter eine Rotordrehzahl (n) umfasst.

8. Verfahren nach einem der Ansprüche 1 bis 7, **dadurch gekennzeichnet, dass** der mindestens eine Betriebsparameter einen Zustand der Rotorblattheizeinrichtung (22) umfasst.

9. Verfahren nach einem der Ansprüche 1 bis 8, **dadurch gekennzeichnet, dass** der angenommene Temperaturstartwert ($T_{start}$) einer gemessenen Umgebungstemperatur ($T_U$) entspricht.

10. Verfahren nach einem der Ansprüche 1 bis 9, **dadurch gekennzeichnet, dass** in vorgegebenen Zeitabständen die Rotorblattheizeinrichtung (22) für einen vorgegebenen Zeitraum deaktiviert wird und anschließend als Temperaturstartwert ($T_{start}$) die Umgebungstemperatur ($T_U$) angenommen wird.

11. Verfahren nach einem der Ansprüche 1 bis 10, **dadurch gekennzeichnet, dass** die Rotorblattheizeinrichtung (22) für einen vorgegebenen Zeitraum aktiviert wird und anschließend als Temperaturstartwert ($T_{start}$) die Umgebungstemperatur ($T_U$) zuzüglich einer maximalen Temperaturdifferenz ($\Delta T_{max,1}$, $\Delta T_{max,2}$), die mit der Rotorblattheizeinrichtung (22) erzielbar ist, angenommen wird.

12. Verfahren nach einem der Ansprüche 1 bis 11, **dadurch gekennzeichnet, dass** ein Aktivieren der Rotorblattheizeinrichtung (22) in mehreren unterschiedlichen Leistungsstufen erfolgt, wobei die beim Berechnen der Temperaturänderung berücksichtigte, mindestens eine Kenngröße für das Temperaturverhalten des Rotorblatts (20) von einer aktivierten Leistungsstufe abhängig ist.

13. Verfahren nach einem der Ansprüche 1 bis 12, **dadurch gekennzeichnet, dass** die Ermittlung der aktuellen Temperatur ($T_{akt}$) für mehrere vorgegebene Punkte an dem Rotorblatt (20) vorgenommen wird.

14. Verfahren nach Anspruch 13, **dadurch gekennzeichnet, dass** beim Aktivieren der Rotorblattheizeinrichtung (22) derjenige Punkt ausgewertet wird, für den die niedrigste Temperatur ermittelt wurde und/oder dass beim Deaktivieren der Rotorblattheizeinrichtung (22) derjenige Punkt ausgewertet wird, für den die höchste Temperatur ermittelt wurde.

15. Windenergieanlage (10) mit einer Rotorblattheizeinrichtung (22) und einer Steuerung (24), die die Rotorblattheizeinrichtung (22) in Abhängigkeit einer ermittelten, aktuellen Temperatur ($T_{akt}$) eines Rotorblatts (20) aktivieren und deaktivieren kann, **dadurch gekennzeichnet, dass** die Steuerung (24) dazu ausgebildet ist, zum Ermitteln der aktuellen

Temperatur ($T_{akt}$) die folgenden Schritte auszuführen:

> • Annehmen eines Temperaturstartwerts ($T_{start}$),
> • Berechnen einer Temperaturänderung unter Berücksichtigung mindestens einer vorgegebenen Kenngröße für das Temperaturverhalten des Rotorblatts (20) und mindestens eines Betriebsparameters der Windenergieanlage (10).

**Claims**

1. A method for operating a wind turbine (10) comprising the following steps:

> • determining a current temperature ($T_{curr}$) of a rotor blade (20),
> • activating and deactivating a rotor blade heating device (22) in dependence upon the determined current temperature ($T_{curr}$), **characterized in that** when the current temperature ($T_{curr}$) is determined, the following steps are carried out:
> • assuming a temperature starting value ($T_{start}$),
> • calculating a change in temperature taking into account at least one predefined characteristic variable for the temperature behavior of the rotor blade (20) and at least one operating parameter of the wind turbine (10).

2. The method according to claim 1, **characterized in that** the rotor blade heating device (22) is activated if the determined current temperature ($T_{curr}$) is below a predefined minimum temperature ($T_{min}$).

3. The method according to claim 1 or 2, **characterized in that** the rotor blade heating device (22) is deactivated if the determined current temperature ($T_{curr}$) exceeds a predefined maximum temperature ($T_{max}$).

4. The method according to one of claims 1 to 3, **characterized in that** the at least one predefined characteristic variable comprises a time constant ($\tau$) for the heating behavior and/or cooling behavior of the rotor blade (20).

5. The method according to one of claims 1 to 4, **characterized in that** the at least one predefined characteristic variable comprises a maximum temperature difference ($\Delta T_{max,1}$, $\Delta T_{max,2}$) which can be achieved with the rotor blade heating device (22).

6. The method according to claim 4 or 5, **characterized in that** the time constant ($\tau$) and/or the maximum temperature difference ($\Delta T_{max,1}$, $\Delta T_{max,2}$) are/is dependent on a wind speed and/or a rotor rotational speed (n).

7. The method according to one of claims 1 to 6, **characterized in that** the at least one operating parameter comprises a rotor rotational speed (n).

8. The method according to one of claims 1 to 7, **characterized in that** the at least one operating parameter comprises a state of the rotor blade heating device (22).

9. The method according to one of claims 1 to 8, **characterized in that** the assumed temperature starting value ($T_{start}$) corresponds to a measured ambient temperature ($T_U$).

10. The method according to one of claims 1 to 9, **characterized in that** the rotor blade heating device (22) is deactivated for a predefined time period at predefined time intervals and subsequently the ambient temperature ($T_U$) is assumed as the temperature starting value ($T_{start}$).

11. The method according to one of claims 1 to 10, **characterized in that** the rotor blade heating device (22) is activated for a predefined time period and subsequently the ambient temperature ($T_U$) plus a maximum temperature difference ($\Delta T_{max,1}$, $\Delta T_{max,2}$), which can be achieved with the rotor blade heating device (22), is assumed as the temperature starting value ($T_{start}$).

12. The method according to one of claims 1 to 11, **characterized in that** the rotor blade heating device (22) is activated in a plurality of different power stages, wherein the at least one characteristic variable for the temperature behavior of the rotor blade (20), which is taken into account during the calculation of the change in temperature, is dependent on an activated power level.

13. The method according to one of claims 1 to 12, **characterized in that** the current temperature ($T_{curr}$) is determined for a plurality of predefined points on the rotor blade (20).

14. The method according to claim 13, **characterized in that** during the activation of the rotor blade heating device (22) that point for which the lowest temperature has been determined is evaluated, and/or during the deactivation of the rotor blade heating device (22) that point for which the highest temperature has been determined is evaluated.

15. A wind turbine (10) having a rotor blade heating device (22) and a controller (24) which can activate and deactivate the rotor blade heating device (22) in dependence upon a determined current temperature

($T_{curr}$) of a rotor blade (20), wherein the controller (24) is designed to carry out the following steps in order to determine the current temperature ($T_{curr}$):

  • assuming a temperature starting value ($T_{start}$),
  • calculating a change in temperature taking into account at least one predefined characteristic variable for the temperature behavior of the rotor blade (20) and at least one operating parameter of the wind turbine (10).

**Revendications**

1. Procédé de fonctionnement d'une éolienne (10), avec les étapes suivantes :

  • détermination d'une température actuelle ($T_{akt}$) d'une pale de rotor (20),
  • activation et désactivation d'un dispositif de chauffage de pale de rotor (22) en fonction de la température actuelle ($T_{akt}$) déterminée, **caractérisé en ce que**, lors de la détermination de la température actuelle ($T_{akt}$), les étapes suivantes sont réalisées :
  • adoption d'une valeur initiale de température ($T_{start}$),
  • calcul d'une variation de température en prenant en compte au moins une grandeur caractéristique prédéfinie pour le comportement en température de la pale de rotor (20) et au moins un paramètre de fonctionnement de l'éolienne (10).

2. Procédé selon la revendication 1, **caractérisé en ce que** le dispositif de chauffage de pale de rotor (22) est activé quand la température actuelle ($T_{akt}$) déterminée passe sous une température minimale ($T_{min}$) prédéfinie.

3. Procédé selon la revendication 1 ou 2, **caractérisé en ce que** le dispositif de chauffage de pale de rotor (22) est désactivé quand la température actuelle ($T_{akt}$) déterminée dépasse une température maximale ($T_{max}$) prédéfinie.

4. Procédé selon l'une des revendications 1 à 3, **caractérisé en ce que** la grandeur caractéristique prédéfinie au moins au nombre de un comprend une constante de temps ($\tau$) pour le comportement en chauffage et/ou en refroidissement de la pale de rotor (20).

5. Procédé selon l'une des revendications 1 à 4, **caractérisé en ce que** la grandeur caractéristique prédéfinie au moins au nombre de un comprend une différence de température maximale ($\Delta T_{max,1}$, $\Delta T_{max,2}$) qui peut être atteinte avec le dispositif de chauffage de pale de rotor (22).

6. Procédé selon la revendication 4 ou 5, **caractérisé en ce que** la constante de temps ($\tau$) et/ou la différence de température maximale ($\Delta T_{max,1}$, $\Delta T_{max,2}$) est fonction d'une vitesse du vent et/ou d'une vitesse de rotation du rotor (n).

7. Procédé selon l'une des revendications 1 à 6, **caractérisé en ce que** le paramètre de fonctionnement au moins au nombre de un comprend une vitesse de rotation du rotor (n).

8. Procédé selon l'une des revendications 1 à 7, **caractérisé en ce que** le paramètre de fonctionnement au moins au nombre de un comprend un état du dispositif de chauffage de pale de rotor (22).

9. Procédé selon l'une des revendications 1 à 8, **caractérisé en ce que** la valeur initiale de température ($T_{start}$) adoptée correspond à une température ambiante ($T_U$) mesurée.

10. Procédé selon l'une des revendications 1 à 9, **caractérisé en ce que**, à des intervalles de temps prédéfinis, le dispositif de chauffage de pale de rotor (22) est désactivé pendant un laps de temps prédéfini et ensuite la température ambiante ($T_U$) est adoptée en tant que valeur initiale de température ($T_{start}$).

11. Procédé selon l'une des revendications 1 à 10, **caractérisé en ce que** le dispositif de chauffage de pale de rotor (22) est activé pendant un laps de temps prédéfini et ensuite la température ambiante ($T_U$), plus une différence de température maximale ($\Delta T_{max,1}$, $\Delta T_{max,2}$) qui peut être atteinte avec le dispositif de chauffage de pale de rotor (22), est adoptée en tant que valeur initiale de température ($T_{start}$).

12. Procédé selon l'une des revendications 1 à 11, **caractérisé en ce qu'**une activation du dispositif de chauffage de pale de rotor (22) s'effectue en plusieurs niveaux de puissance différents, la grandeur caractéristique au moins au nombre de un pour le comportement en température de la pale de rotor (20) qui est prise en compte lors du calcul de la variation de température étant fonction d'un niveau de puissance activé.

13. Procédé selon l'une des revendications 1 à 12, **caractérisé en ce que** la détermination de la température actuelle ($T_{akt}$) est entreprise pour plusieurs points prédéfinis sur la pale de rotor (20).

14. Procédé selon la revendication 13, **caractérisé en ce que**, lors de l'activation du dispositif de chauffage de pale de rotor (22), c'est le point pour lequel la température la plus faible a été déterminée qui est analysé, et/ou **en ce que**, lors de la désactivation du dispositif de chauffage de pale de rotor (22), c'est le point pour lequel la température la plus élevée a été déterminée qui est analysé.

15. Eolienne (10) avec un dispositif de chauffage de pale de rotor (22) et une commande (24) qui peut activer et désactiver le dispositif de chauffage de pale de rotor (22) en fonction d'une température actuelle ($T_{akt}$) déterminée d'une pale de rotor (20), **caractérisée en ce que** la commande (24) est constituée pour réaliser les étapes suivantes en vue de la détermination de la température actuelle ($T_{akt}$) :

• adoption d'une valeur initiale de température ($T_{start}$),
• calcul d'une variation de température en prenant en compte au moins une grandeur caractéristique prédéfinie pour le comportement en température de la pale de rotor (20) et au moins un paramètre de fonctionnement de l'éolienne (10).

# Fig. 1

$\Delta\,T_{max}\,(n)$

n    τ(n)

Fig. 2

EP 2 998 573 B1

# Fig. 3

**EP 2 998 573 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2626557 A1
- EP 1573199 B1
- US 20100224621 A